(19) Europäisches Patentamt
European Patent Office
Office européen des brevets

(11) **EP 1 411 441 A1**

(12) **EUROPEAN PATENT APPLICATION**
published in accordance with Art. 158(3) EPC

(43) Date of publication:
**21.04.2004 Bulletin 2004/17**

(51) Int Cl.7: **G06F 17/12**, G06F 17/16,
G06F 17/10, H04B 7/26,
H04B 7/005, H04B 1/707

(21) Application number: **03705301.4**

(22) Date of filing: **19.02.2003**

(86) International application number:
**PCT/JP2003/001752**

(87) International publication number:
**WO 2003/077150 (18.09.2003 Gazette 2003/38)**

(84) Designated Contracting States:
**AT BE BG CH CY CZ DE DK EE ES FI FR GB GR
HU IE IT LI LU MC NL PT SE SI SK TR**
Designated Extension States:
**AL LT LV MK RO**

(30) Priority: **19.02.2002 JP 2002041259**

(71) Applicant: **MATSUSHITA ELECTRIC INDUSTRIAL
CO., LTD.**
**Kadoma-shi, Osaka 571-8501 (JP)**

(72) Inventor: **IKEDA, Tetsuya**
**Yokohama-shi, Kanagawa 224-0051 (JP)**

(74) Representative: **Grünecker, Kinkeldey,
Stockmair & Schwanhäusser Anwaltssozietät
Maximilianstrasse 58
80538 München (DE)**

(54) **MATRIX CALCULATION DEVICE**

(57)   Diagonal elements of a triangular matrix are stored in memories 12 and 17, a computation using an output from each of shift stages REG1 to REG (N-1) of a shift register 11 and a diagonal element output from the memory 12 is performed, a computation result is input to the shift register 11, computation processing using a new register output from each of shift stages REG1 to REG (N-1) of the shift register 11 and the diagonal element output from the memory 12 is cyclically repeated, thereby solving a simultaneous linear equation.

FIG.1

EP 1 411 441 A1

**Description**

Technical Field

The present invention relates to a matrix computation apparatus, and is suitable for use in a case where a solution of a large-scale simultaneous linear equation, which is necessary to perform, for example, structural analysis, is computed at high speed.

Background Art

Conventionally, a solution of a large-scale simultaneous linear equation must be obtained when a large-scale structural analysis and the like are executed by a computer using a finite element method. As one of the methods for obtaining a solution of a large-scale simultaneous linear equation at high speed, an LU decomposition (triangular factorization) method as shown in the following equation is known:

$$Fd = y \tag{1}$$

Here, F and y are matrixes of N rows x N columns and N rows x 1 column, respectively, and a matrix d to be obtained is N rows x 1 column. According to the LU decomposition method, a known symmetric matrix F can be decomposed as shown in the following equation based on a lower triangular matrix A and its transposed matrix $A^T$:

$$F = AA^T \tag{2}$$

Accordingly, if equation (2) is substituted into equation (1), the following equation is established:

$$AA^T d = y \tag{3}$$

Moreover, if $A^T d = z$ is placed, equation (3) is changed as shown in the following equation:

$$Az = y \tag{4}$$

Accordingly, calculations in two steps set forth below are executed, thereby enabling to obtain a solution d of the simultaneous linear equation shown in equation (1). Namely, first of all, in a first step (hereinafter referred to as step 1), a matrix z is obtained from equation (4). As mentioned above, since A is a lower triangular matrix, an equation for obtaining a matrix z is shown as follows:

$$z_1 = \frac{1}{A_{11}} y_1, \quad z_i = \frac{1}{A_{i,i}} \left[ y_i - \sum_{j=1}^{i-1} A_{i,j} \cdot z_j \right] \quad i = 2, 3, \cdots, N \qquad \cdots (5)$$

Here, z and y are vectors of N rows x 1 column, and previously obtained z is sequentially used in order from element $z_1$ of the first row, thereby enabling to easily obtain elements up to element $Z_N$ of Nth row. This calculation method is referred to as a forward substitution since a first element to Nth element of the matrix z are sequentially calculated in order.

Next, in a second step (hereinafter referred to as step 2), a solution d is obtained from $A^T d = z$ using the matrix z calculated in step 1. As explained above, $A^T$ is the transposed matrix of A, resulting in an upper triangular matrix. Accordingly, similar to equation (5), a computation expression for obtaining a solution d of a simultaneous linear equation is shown as follows:

$$d_N = \frac{1}{A_{NN}} z_N, \quad d_1 = \frac{1}{A_{i,i}} \left[ z_i - \sum_{j=i+1} A_{i,j} \cdot d_j \right] \quad i = N-1, N-2, \cdots, 1 \quad \cdots (6)$$

Moreover, this calculation method is referred to as a backward substitution since elements are sequentially calculated up to a component of a first row in reverse order from the element of Nth row of matrix d.

Conventionally, multiple processors are used to perform calculations in parallel in order to solve the calculation of the forward substitution and that of the backward substitution at high speed. Some contrivance is made such that the multiple processors are efficiently operated to perform a high speed computation. For example, Unexamined Japanese Patent Publication 2000-339296 discloses a method in which elements in a column direction of an upper triangle matrix A are stored in memories of the respective processors to reduce waiting time at each processor.

However, as is obvious from the equations (5) and (6), according to the LU decomposition (triangular factorization) method, since it is necessary to calculate an element of a next matrix using one previously calculated element of the matrix, data transmission and reception between the processors are surely required.

Moreover, the elements in the column direction of the upper triangular matrix A are stored in the memories of the respective processors. For this reason, at the time of the calculation of forward substitution, elements necessary for computation are provided in the respective processors, so that calculation is possible, while at the time of the calculation of backward substitution, a necessary matrix element must be transferred from another processor, causing a problem in which a computation efficiency will reduced.

Disclosure of Invention

An object of the present invention is to provide a matrix computation apparatus that eliminates data transmission and reception between processors to enable to perform computation efficiently with a small circuit scale.

The object is achieved by solving a simultaneous linear equation in such a way that diagonal elements of a triangular matrix are stored in memories, a computation using an output from each shift stage of a shift register and the diagonal element output from the memory is performed, a computation result is input to the shift register, and computation processing using a new register output from each shift stage of the shift register and the diagonal element from the memory is cyclically repeated.

Brief Description of Drawings

FIG. 1 is a block diagram illustrating a configuration of a matrix computation apparatus according to an Embodiment of the present invention;

FIG. 2 is a block diagram illustrating a configuration of a matrix computation apparatus that obtains a solution of a simultaneous linear equation relating to a matrix of 5 rows x 5 columns;

FIG. 3 is a view illustrating a data location of a lower triangular matrix according to Embodiment;

FIG.4 is a view illustrating a state transition of a first cycle to a third cycle in connection with a shift register and a memory at a forward substitution calculating time;

FIG. 5 is a view illustrating a state transition of a fourth cycle to an end of computation in connection with a shift register and a memory at a forward substitution calculating time;

FIG. 6 is a view illustrating a data location of an upper triangular matrix according to Embodiment;

FIG.7 is a view illustrating a state transition of a first cycle to a third cycle in connection with a shift register and a memory at a backward substitution calculating time;

FIG. 8 is a view illustrating a state transition of a fourth cycle to an end of computation in connection with a shift register and a memory at a backward substitution calculating time; and

FIG. 9 is a block diagram illustrating a configuration of an interference signal removing apparatus in which a matrix computation apparatus of the present invention is used.

Best Mode for Carrying Out the Invention

The following will specifically explain an Embodiment of the present invention with reference the drawings.

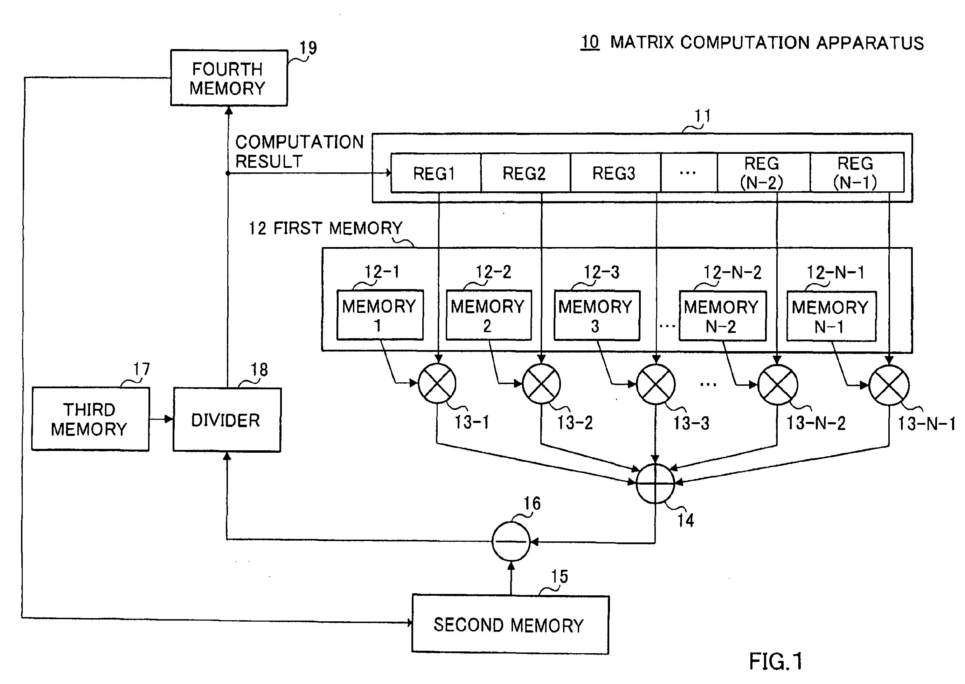

FIG. 1 is a block diagram illustrating a configuration of a matrix computation apparatus according to an Embodiment of the present invention. A matrix computation apparatus 10 obtains a solution of a simultaneous linear equation relating to a matrix of N rows x N columns triangularly decomposed shown by equation (1).

The matrix computation apparatus 10 includes a shift register 11 having (N-1) stages that sequentially store obtained calculation results. A first memory 12 stores diagonal elements of a known triangular matrix. (N-1) multipliers 13-1 to 13-N-1 multiply output values from the respective shift registers REG1 to REG (N-1) of the shift register and the respective matrix elements output from the first memory 12, respectively. An adder 14 adds all multiplication results output from the respective multipliers 13-1 to 13-N-1.

A second memory 15 stores elements of a known matrix of N rows x 1 column. A subtractor 16 subtracts an additional result of the adder 14 from a value read from the second memory 15. A third memory 17 stores diagonal elements of the known triangular matrix. A divider 18 divides an output from the subtractor 16 by a value read from the third memory 17. A computation result output from the divider 18 is stored in the third memory 17.

Thus, in the matrix computation apparatus 10, for obtaining a solution d of the simultaneous linear equation relating to the matrix of N rows x N columns subjected to a lower triangular decomposition, at a forward substitution calculating time, diagonal elements of a known triangular matrix A are stored in the first memory 12, the respective elements of a known matrix y $(y_1, y_2, ..., y_n)$ of N rows x 1 column are stored in the second memory 15, the respective diagonal elements $(a_{11}, a_{22}, ..., a_{nn})$ of the known matrix A are stored in the third memory 17, and elements of matrix z to be obtained are sequentially calculated from the first row every one cycle and stored in a fourth memory 19.

Here, the first memory 12 includes the total (N-1) memories of memories 12-1, 12-1, ..., 12-(N-1), each having an address area of (N-1). In each of the memories 12-1, 12-1, ..., 12-(N-1), diagonal elements of the lower triangular matrix A are stored as in $a_2 = \{a_{21}, a_{32}, a_{43}, ..., a_{(n)(n-1)}\}$, $a_3 = \{a_{31}, a_{42}, a_{54}, ..., a_{(n)(n-2)}\}$, ..., $a_{n-2} = \{a_{(N-1, 1)}, a_{(N, 2)}\}$, $a_{n-1} = \{a_{(N, 1)}\}$.

Moreover, similar to the forward substitution calculating time, components of the known triangular matrix A and diagonal elements of A are stored in the first memory 12 and the third memory 17, respectively at the backward substitution calculating time. In contrast to this, in the second memory 15, components of the matrix z $(z_1, z_2, ..., z_n)$ obtained by the calculation of the forward substitution are stored.

Then, (N-1) multipliers 13-1 to 13-N-1 multiply a value of the shift register 11 and the respective elements read from the first memory 12, and the adder 14 adds all multiplication results output from the respective multipliers 13-1 to 13-N-1. The subtractor 16 subtracts an additional result of the adder 14 from a value read from the second memory 15. The divider 18 divides an output from the subtractor 16 by a value read from the third memory 17. Accordingly, a solution d of the simultaneous linear equation shown by equation (1) is sequentially output as a computation result from the divider 18 every one cycle.

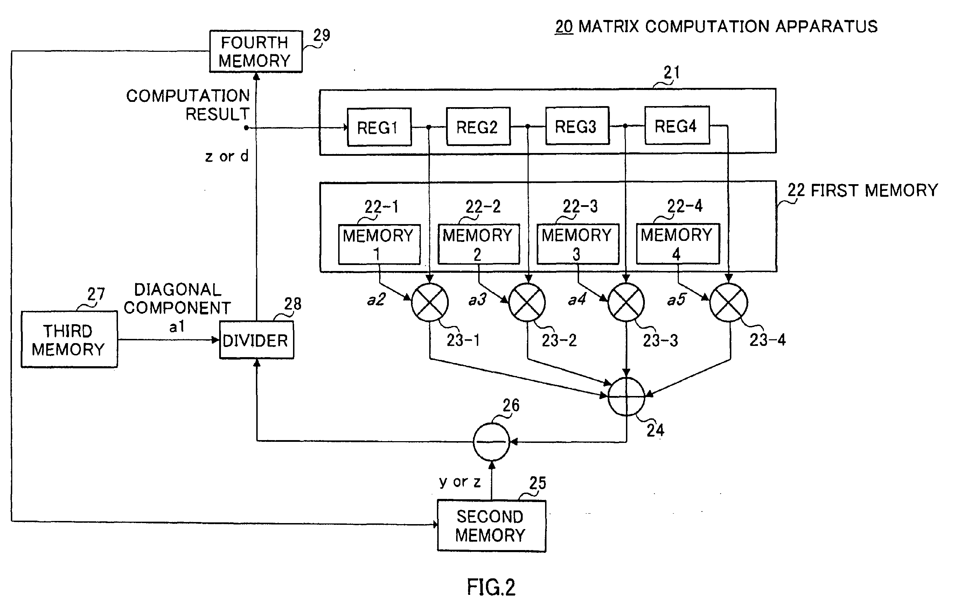

The following will explain an operation of the matrix computation apparatus 10 with reference to FIG.2, FIG. 3, FIG. 4, FIG. 5, FIG. 6, FIG. 7, and FIG. 8. Hereinafter, in order to simplify the explanation, a case where N = 5 will be considered. Namely, FIG. 1 explained the matrix computation apparatus 10 that obtained a solution d of the simultaneous linear equation relating to the matrix of N rows x N columns. However, as illustrated in FIG. 2, the following will explain an operation of a matrix computation apparatus 20 that obtains a solution d of the simultaneous linear equation relating to the matrix of 5 rows x 5 columns. In addition, the functions of the respective configuration components of the matrix computation apparatus 20 are the same as those of the respective configuration components of the matrix computation apparatus 10.

First of all, an explanation will be given of an operation that obtains a solution z of the simultaneous linear equation shown by equation (4) from the calculation of the forward substitution in the matrix computation apparatus 20. The calculation of the forward substitution starts from an initial state and performs for 5 cycles.

(Initial state)

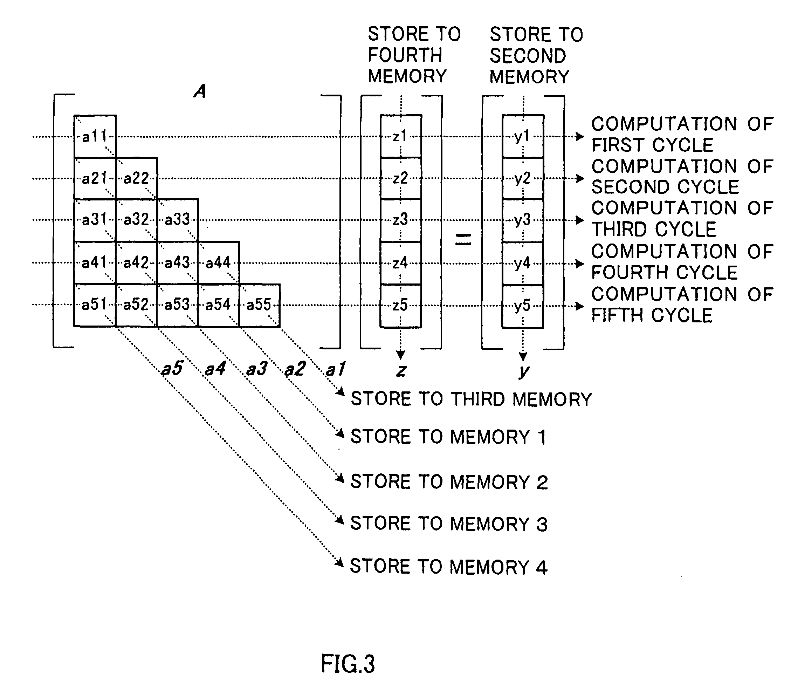

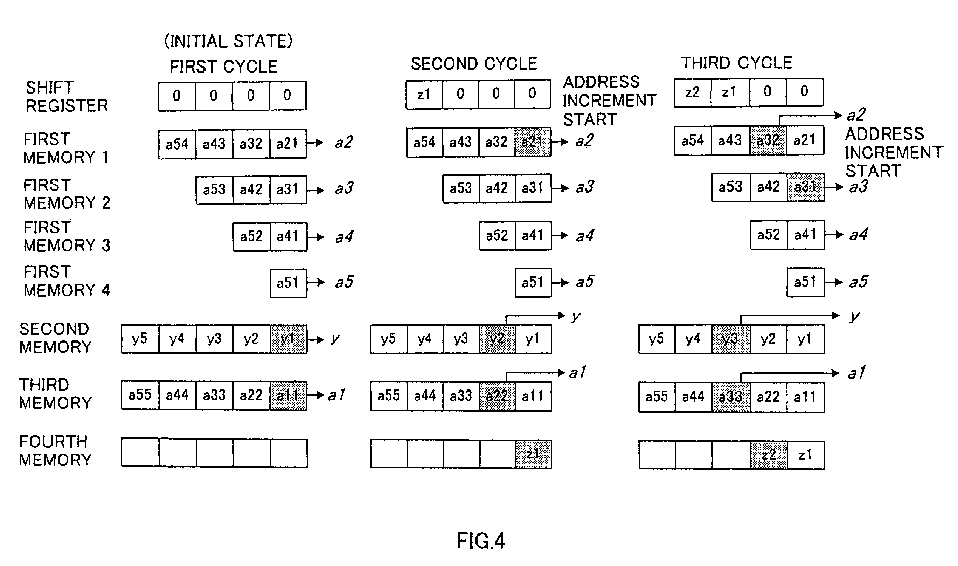

When the components of the known matrix A and those of y are set to values as illustrated in FIG. 3, the state of the shift register 21 and values stored in the first, second, third memories 22, 25 and 27 and values output from the shift register 21, the first, second and third memories 22, 25, and 27 in an initial state are shown as in FIG. 4.

Namely, in the initial state, {REG1, REG2, REG3, REG4} = {0, 0, 0, 0} is output from the shift register 21. A next value is output from each of a memory 22-1 (memory 1) , a memory 22-2 (memory 2), a memory 22-3 (memory 3) and a memory 22-4 (memory 4) of the first memory 22. More specifically, $a2 = a_{21}$ of stored $a2 = \{a_{21}, a_{32}, a_{43}, a_{54}\}$ is output from the memory 1, $a3 = a_{31}$ of stored $a3 = \{a_{31}, a_{42}, a_{53}\}$ is output from the memory 2, $a4 = a_{41}$ of stored $a4 = \{a_{41}, a_{52}\}$ is output from the memory 3, and $a5 = a_{51}$ of stored $a5 = \{a_{51}\}$ is output from the memory 4.

From the second memory 25, $y = y_1$ of stored $y = \{y_1, y_2, y_3, y_4, y_5\}$ is output. From the third memory 27, $a1 = a_{11}$ of stored $a1 = \{a_{11}, a_{22}, a_{33}, a_{44}, a_{55}\}$ is output.

Sequentially, calculation steps of each cycle will be explained.

(First cycle)

The matrix computation apparatus 20 obtains an element of $z_1$ based on matrix elements output from the shift register 21 and the first, second, and third memories 22, 25, and 27 in the initial state. At this time, a calculation of $z_1 = 1/a_{11} \times y_1$ is executed as a computation expression shown in equation (5). Then, a computation result $z_1$ is stored in the fourth memory 29 and the shift register 21. Moreover, after the execution of calculation, addresses of the second memory 25 and third memory 27 are incremented. However, the address of the first memory 22 is not incremented.

(Second cycle)

The matrix computation apparatus 20 executes a calculation of $z_2 = 1/a_{22} \times (y_2 - a_{21}z_1)$ as in a computation expression shown in equation (5) in order to calculate a component of $z_2$. At this time, the state of unexecuted shift register 21, an outputting value, and values output from the first, second, third memories 22, 25 and 27 are as follows as shown in FIG. 4.

{REG1, REG2, REG3, REG4} = {$z_1$, 0, 0, 0} is output from the shift register 21. A next value is output from each of the memory 22-1 (memory 1), the memory 22-2 (memory 2), the memory 22-3 (memory 3), and the memory 22-4 (memory 4) of the first memory 22. More specifically, a2=$a_{21}$ is output from the memory 1, a3=$a_{31}$ is output from the memory 2, a4=$a_{41}$ is output from the memory 3, and a5=$a_{51}$ is output from the memory 4. Moreover, y=$y_2$ is output from the second memory 25. Still moreover, a1=$a_{22}$ is output from the third memory 24.

Then, a computation result $z_2$ is stored in the fourth memory 29 and the shift register 21. After the execution of calculation, addresses of the second memory 25 and third memory 27 are incremented. Moreover, the address of only the memory 22-1 (memory 1) of the first memory 22 is incremented.

(Third cycle)

The matrix computation apparatus 20 executes a calculation of $z_3 = 1/a_{33} \times (y_3 - a_{31}z_1 - a_{32}z_2)$ as in a computation expression shown in equation (5) in order to calculate a component of $z_3$. At this time, the state of unexecuted shift register 21, an outputting value, and values output from the first, second, third memories 22, 25 and 27 are as follows as shown in FIG. 4.

{REG1, REG2, REG3, REG4} = {z2, z1, 0, 0} is output from the shift register 21. A next value is output from each of the memory 22-1 (memory 1), the memory 22-2 (memory 2), the memory 22-3 (memory 3) and the memory 22-4 (memory 4) of the first memory 22. More specifically, a2=$a_{32}$ is output from the memory 1, a3=$a_{31}$ is output from the memory 2, a4=$a_{41}$ is output from the memory 3, and a5=$a_{51}$ is output from the memory 4. Moreover, y=$y_3$ is output from the second memory 25. Still moreover, $a_1 = a_{33}$ is output from the third memory 27.

Then, a computation result $z_3$ is stored in the fourth memory 29 and the shift register 21. After the execution of calculation, addresses of the second memory 25 and third memory 27 are incremented. Moreover, the addresses of the memory 1 and memory 2 of the first memory 22 are incremented.

(Fourth cycle)

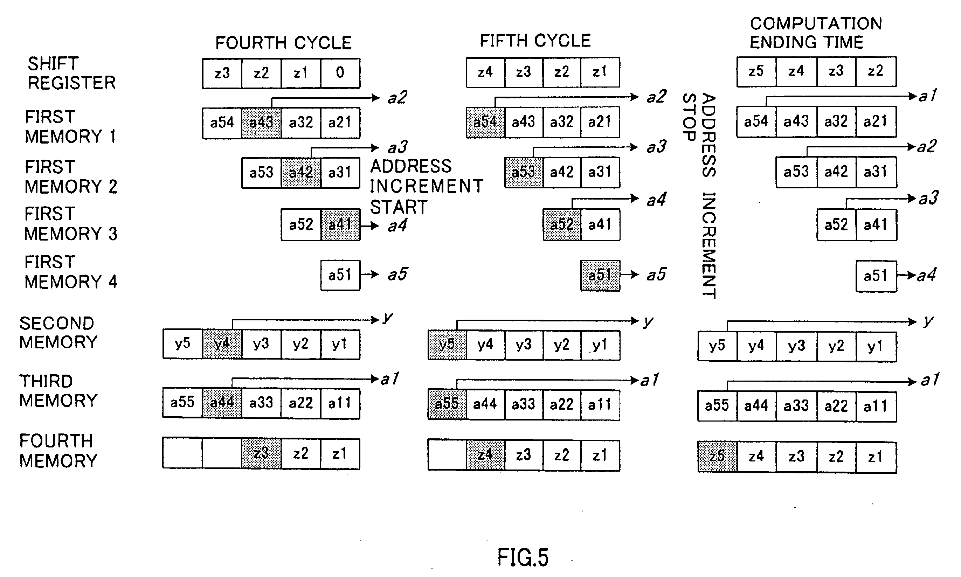

The matrix computation apparatus 20 executes a calculation of $z_4 = 1/a_{44} \times (y_4 - a_{41}z_1 - a_{42}z_2 - a_{43}z_3)$ as in a computation expression shown in equation (5) in order to calculate a component of $z_4$. At this time, the state of unexecuted shift register 21, an outputting value, and values output from the first, second, third memories 22, 25 and 27 are as follows as shown in FIG. 5.

{REG1, REG2, REG3, REG4} = {z3, z2, z1, z0} is output from the shift register 21. A next value is output from each of the memory 22-1 (memory 1), the memory 22-2 (memory 2), the memory 22-3 (memory 3) and the memory 22-4 (memory 4) of the first memory 22. More specifically, a2=$a_{43}$ is output from the memory 1, a3=$a_{42}$ is output from the memory 2, a4=$a_{41}$ is output from the memory 3, and a5=$a_{51}$ is output from the memory 4. Moreover, y=$y_4$ is output from the second memory 25. Still moreover, $a_1 = a_{44}$ is output from the third memory 27.

Then, a computation result $z_4$ is stored in the fourth memory 29 and the shift register 21. After the execution of calculation, addresses of the second memory 25 and third memory 27 are incremented. Moreover, the addresses of the memory 1, memory 2, and memory 3 of the first memory 22 are incremented.

(Fifth cycle)

The matrix computation apparatus 20 executes a calculation of $z_5 = 1/a_{55} \times (y_5 - (a_{51}z_1 + a_{52}z_2 + a_{53}z_3 + a_{54}z_4))$ as in a computation expression shown in equation (5) in order to calculate a component of $z_5$. At this time, the state of unexecuted shift register 21, an outputting value, and values output from the first, second, third memories 22, 25 and 27 are as follows as shown in FIG. 5.

{REG1, REG2, REG3, REG4} = {z4, z3, z2, z1} is output from the shift register 21. A next value is output from each of the memory 22-1 (memory 1) , the memory 22-2 (memory 2), the memory 22-3 (memory 3) and the memory 22-4 (memory 4) of the first memory 22. More specifically, $a2=a_{54}$ is output from the memory 1, $a3=a_{53}$ is output from the memory 2, $a4=a_{52}$ is output from the memory 3, and $a5=a_{51}$ is output from the memory 4. Moreover, $y=y_5$ is output from the second memory 25. Still moreover, $a_1=a_{55}$ is output from the third memory 27.

Then, a computation result $z_5$ is stored in the fourth memory 29 and the shift register 21. After the execution of calculation, in the fifth cycle, addresses of the second memory 25 and third memory 27 are not incremented. Moreover, the addresses of the memory 1, memory 2, memory 3, and memory 4 of the first memory 22 are not incremented.

Thus, in the fifth cycle, the first memory 22 returns to the initial state, and the output values of the second memory 25 and third memory 27 also return to the initial state. Then, all computation results $z=\{z_1, z_2, z_3, z_4, z_5\}$ are stored to the fourth memory 29 to obtain a solution z of equation (5).

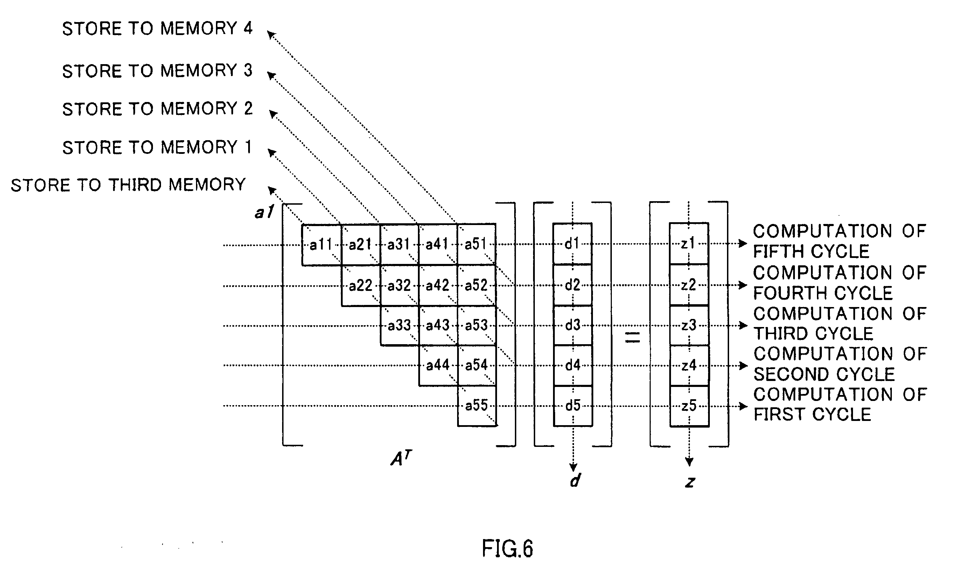

Next, a determinant illustrated in FIG. 6 is calculated by the backward substitution of equation (6) using the matrix z obtained by the aforementioned forward substitution. At this time, the matrix z stored in the fourth memory 29 by the forward substitution is transferred to the second memory 25. The operations of the first memory 22 and third memory 27, which store the elements of the triangular matrix A, and second memory 25, which stores the matrix z, are started at the same address positions as those at which the calculation of the forward substitution ends. Moreover, the shift register 21 is reset to initialize each register and execute the matrix computation shown in FIG. 6 by the backward substitution. The calculation of the backward substitution starts from an initial state and performs for 5 cycles.

(Initial state)

The state of the shift register 21 at the start of the calculation of the backward substitution and values stored in the first, second, third memories 22, 25 and 27 and values output from the shift register 21, the first, second and third memories 22, 25, and 27 are shown as in FIG. 6.

{REG1, REG2, REG3, REG4} = {0, 0, 0, 0} is output from the shift register 21. A next value is output from each of the memory 22-1 (memory 1) , memory 22-2 (memory 2) , memory 22-3 (memory 3) and memory 22-4 (memory 4) of the first memory 22. More specifically, $a2=a_{54}$ is output from the memory 1, $a3=a_{53}$ is output from the memory 2, $a4=a_{52}$ is output from the memory 3, and $a5=a_{51}$ is output from the memory 4. Moreover, from the second memory 25, $y=y_5$ is output. From the third memory 27, $a1=a_{55}$ is output.

Sequentially, calculation steps of each cycle will be explained.

(First cycle)

The matrix computation apparatus 20 obtains an element of $d_5$ based on matrix elements output from the shift register 21 and the first, second, and third memories 22, 25, and 27 in the initial state. At this time, a calculation of $d_5=1/a_{55} \times z_5$ is executed as a computation expression shown in equation (6). Then, a computation result $d_5$ is stored in the fourth memory 29 and the shift register 21. After the execution of calculation, addresses of the second memory 25 and third memory 27 are decremented. However, the address of the first memory 22 is not decremented.

(Second cycle)

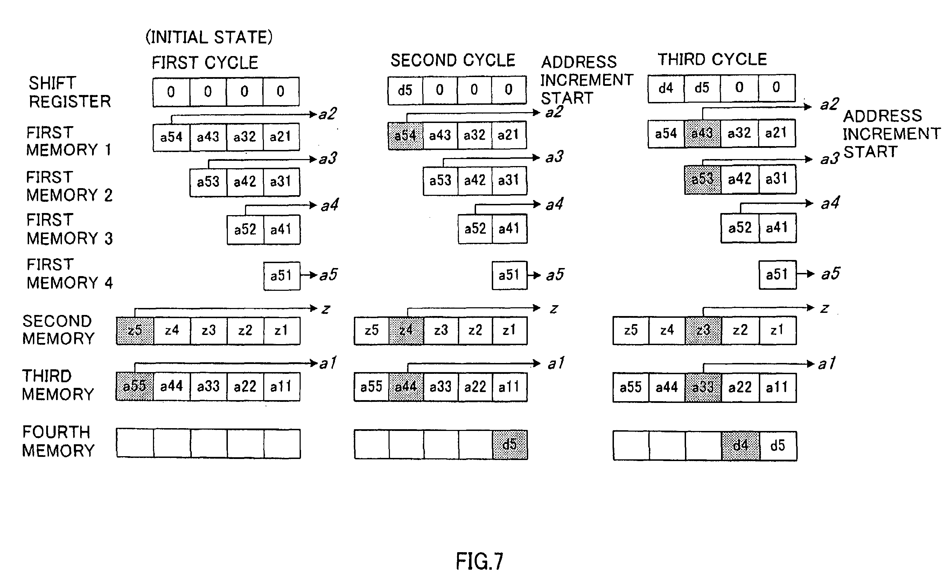

The matrix computation apparatus 20 executes a calculation of $d_4=1/a_{44} \times (z_4-a_{54}d_5)$ as in a computation expression shown in equation (6) in order to calculate a component of $d_4$. At this time, the state of unexecuted shift register 21, an outputting value, and values output from the first, second, third memories 22, 25 and 27 are as follows as shown in FIG. 7.

{REG1, REG2, REG3, REG4} = {$d_5$, 0, 0, 0} is output from the shift register 21. A next value is output from each of the memory 22-1 (memory 1) , the memory 22-2 (memory 2), the memory 22-3 (memory 3) and the memory 22-4 (memory 4) of the first memory 22. More specifically, $a2=a_{54}$ is output from the memory 1, $a3=a_{53}$ is output from the memory 2, $a4=a_{52}$ is output from the memory 3, and $a5=a_{51}$ is output from the memory 4. Moreover, $z=y_4$ is output from the second memory 25. Still moreover, $a_1=a_{44}$ is output from the third memory 27.

Then, a computation result $d_4$ is stored in the fourth memory 29 and the shift register 21. After the execution of calculation, addresses of the second memory 25 and third memory 27 are decremented. Moreover, the address of only the memory 22-1 (memory 1) of the first memory 22 is decremented.

(Third cycle)

The matrix computation apparatus 20 executes a calculation of $d_3=1/a_{33} \times (z_3-a_{43}d_4-a_{53}d_5)$ as in a computation expression shown in equation (6) in order to calculate a component of $d_3$. At this time, the state of unexecuted shift register 21, an outputting value, and values output from the first, second, third memories 22, 25 and 27 are as follows as shown in FIG. 7.

{REG1, REG2, REG3, REG4} = {$d_4$, $d_5$, 0, 0} is output from the shift register 21. A next value is output from each of the memory 22-1 (memory 1), the memory 22-2 (memory 2), the memory 22-3 (memory 3) and the memory 22-4 (memory 4) of the first memory 22. More specifically, $a2=a_{43}$ is output from the memory 1, $a3=a_{53}$ is output from the memory 2, $a4=a_{52}$ is output from the memory 3, and $a5=a_{51}$ is output from the memory 4. Moreover, $z=z_3$ is output from the second memory 25. Still moreover, $a_1=a_{33}$ is output from the third memory 27.

Then, a computation result $d_3$ is stored in the fourth memory 29 and the shift register 21. After the execution of calculation, addresses of the second memory 25 and third memory 27 are decremented. Moreover, the addresses of the memory 1 and memory 2 of the first memory 22 are decremented.

(Fourth cycle)

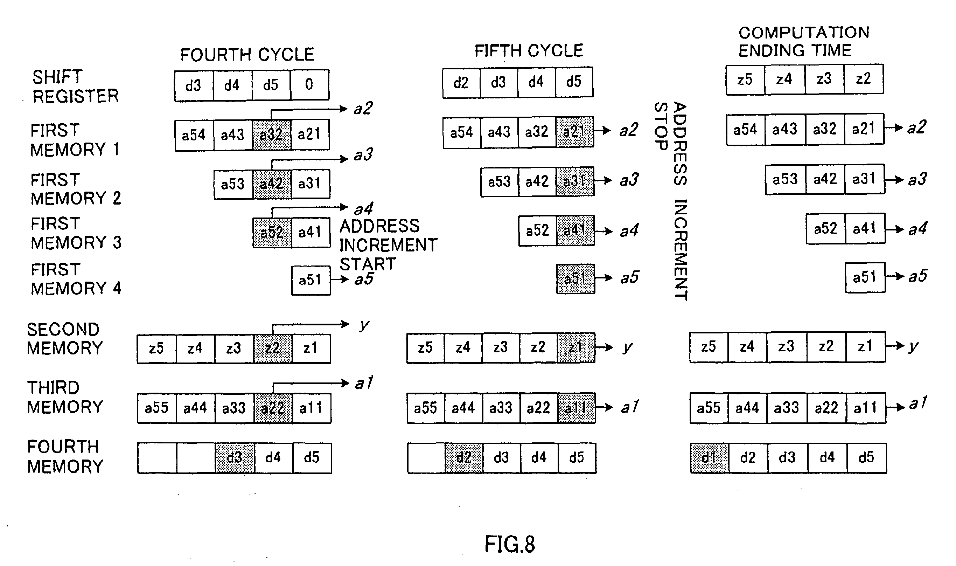

The matrix computation apparatus 20 executes a calculation of $d_2=1/a_{22} \times (z_2-a_{32}d_3-a_{42}d_4-a_{52}d_5)$ as in a computation expression shown in equation (6) in order to calculate a component of $d_2$. At this time, the state of unexecuted shift register 21, an outputting value, and values output from the first, second, third memories 22, 25 and 27 are as follows as shown in FIG. 8.

{REG1, REG2, REG3, REG4} = {$d_3$, $d_4$, $d_5$, 0} is output from the shift register 21. A next value is output from each of the memory 22-1 (memory 1), the memory 22-2 (memory 2), the memory 22-3 (memory 3) and the memory 22-4 (memory 4) of the first memory 22. More specifically, $a2=a_{32}$ is output from the memory 1, $a3=a_{52}$ is output from the memory 2, $a4=a_{52}$ is output from the memory 3, and $a5=a_{51}$ is output from the memory 4. Moreover, $z=z_2$ is output from the second memory 25. Still moreover, $a_1=a_{33}$ is output from the third memory 27.

Then, a computation result $d_2$ is stored in the fourth memory 29 and the shift register 21. After the execution of calculation, addresses of the second memory 25 and third memory 27 are decremented. Moreover, the addresses of the memory 1, memory 2, and memory 3 of the first memory 22 are decremented.

(Fifth cycle)

The matrix computation apparatus 20 executes a calculation of $d_1=1/a_{11} \times (z_1-a_{21}d_2-a_{31}d_3-a_{41}d_4 -a_{51}d_5)$ as in a computation expression shown in equation (6) in order to calculate a component of $d_1$. At this time, the state of unexecuted shift register 21, an outputting value, and values output from the first, second, third memories 22, 25 and 27 are as follows as shown in FIG. 8.

{REG1, REG2, REG3, REG4} = {$d_2$, $d_3$, $d_4$, $d_5$} is output from the shift register 21. A next value is output from each of the memory 22-1 (memory 1), the memory 22-2 (memory 2), the memory 22-3 (memory 3) and the memory 22-4 (memory 4) of the first memory 22. More specifically, $a2=a_{21}$ is output from the memory 1, $a3=a_{31}$ is output from the memory 2, $a4=a_{41}$ is output from the memory 3, and $a5=a_{51}$ is output from the memory 4. Moreover, $z=z_1$ is output from the second memory 25. Still moreover, $a_1=a_{11}$ is output from the third memory 27.

Then, a computation result dl is stored in the fourth memory 29. As a result, all computation results $z=\{d_1$, $d_2$, $d_3$, $d_4$, $d_5\}$ are stored to the fourth memory 29 to obtain a solution d of equation (6).

Thus, the matrix computation apparatus 20 according to this embodiment is provided with the shift register 21, the first memory 22 that stores diagonal elements of the known triangular matrix A of N rows x N column, the second memory 25 that stores the elements of the known matrix of N rows x 1 column, the third memory 27 that stores diagonal elements of the known triangular matrix A of N rows x N column, the multipliers 23-1 to 23-N-1 that multiply multiple outputs of the shift register 21 and multiple diagonal elements stored in the first memory 22 respectively, the adder 24 that adds the multiplication results, the subtractor 26 that subtracts an additional result from the elements stored in the second memory 25, and the divider 28 that divides a subtraction result by the diagonal element stored in the third memory 27, and is configured to cyclically perform processing for inputting a division result to the forefront stage of the shift register 21.

As a result, as mentioned above, the reading addresses of the first memory 22, second memory 25 and third memory 27 are sequentially only incremented or decremented to cyclically perform the forward substitution operation and the backward substitution operation, thereby enabling to obtain a solution d of the simultaneous linear equation relating to a target matrix of N rows x N columns.

According to the aforementioned configuration, since it is possible to calculate one element for one cycle at the time of executing the forward substitution and the backward substitution to the triangularly decomposed triangular matrix in order to obtain a solution of the simultaneous linear equation, the matrix computation apparatuses 10 and 20, which are capable of performing the computation of the simultaneous linear equation at high speed, can be implemented.

Furthermore, the computation result for each cycle is input to the forefront stage of each of the shift registers 11 and 21 and the multiple computation results stored in the shift registers 11 and 21 are sequentially used for a next cycle, enabling to perform an efficient computation.

(Application example)

Moreover, when the matrix computation apparatus according to the present invention is used in a receiving apparatus for mobile communications, a considerable effect can be obtained. This will be specifically explained as follows. In the receiving apparatus for mobile communications, there is an interference signal removal method using a joint detection (hereinafter referred to as "JD") as a method for removing various interferences such as interference due to multipath fading, intersymbol interference, multiple access interference and the like to extract a demodulated signal. This JD is disclosed in "Zero Forcing and Minimum Mean-Square-Error Equalization for Multiuser Detection in Code-Division Multiple-Access Channels" (Klein A., Kaleh G.K., Baier P.W., IEEE Trans. Vehicular Technology, vol.45, pp. 276-287, 1996.)

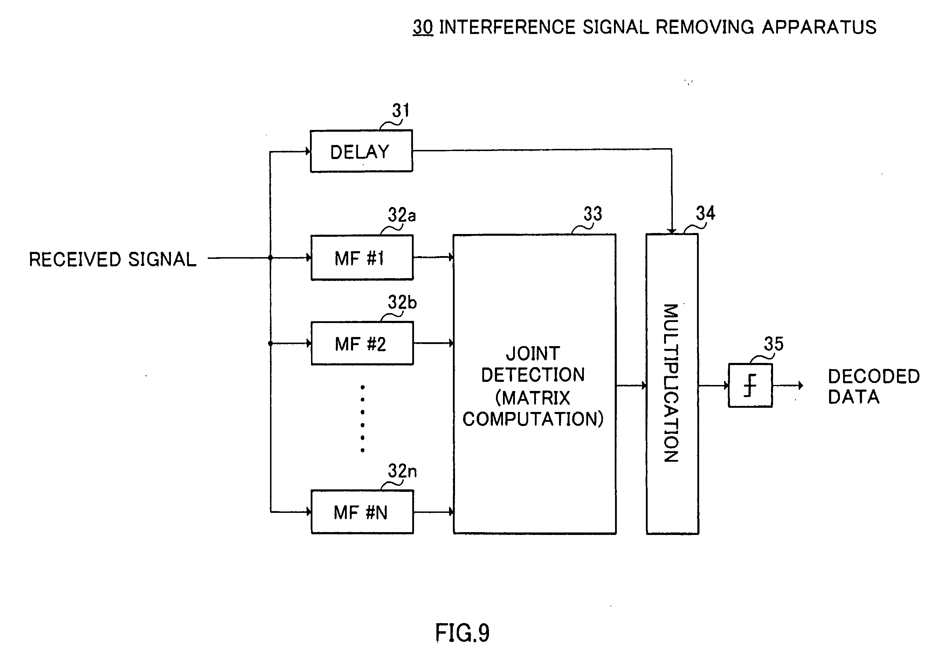

FIG. 9 is a block diagram illustrating a configuration of an interference signal removing apparatus using JD. Received signals are sent to a delay device 31 and a matched filter (MF#1) 32a to a matched filter (MF#N) 32n.

In the matched filters 32a to 32n, a midamble portion is used in a time slot of the received signal, and channel estimation is executed for each user. Namely, in the matched filters 32a to 32n, a correlation between a known midamble allocated to each of user 1 to user n and the midamble portion of the received signal is obtained in a range of a maximum delay width, thereby obtaining a channel estimation (matrix) for each user. Then, the channel estimation values to the user 1 to user n are sent to a JD section 33.

The JD section 33 performs a matrix computation set forth below using the channel estimation value for each user. Namely, a convolution operation between a channel estimation value for each user and a spread code allocated to each user is first performed to obtain a convolutional result (matrix) for each user. This makes it possible to obtain a matrix A (hereinafter referred to as "system matrix") where the convolutional results of the respective users are regularly arranged.

Moreover, a matrix multiplication shown in the following equation is performed using the system matrix A to obtain a matrix B shown in the following equation.

$$B = (A^H \cdot A)^{-1} \cdot A^H \tag{7}$$

where $A^H$ is a conjugate transposed matrix of the system matrix A, and $(A^H \cdot A)^{-1}$ is an inverse matrix of $A^H \cdot A$.

The matrix B obtained by the above matrix computation is sent to a multiplying section 34. The multiplying section 34 performs multiplication processing between a data portion of the received signal sent form the delay device 31 and the matrix B sent from the JD section 33 to obtain data for each user from which interference is removed. Data for each user obtained at this time is sent to an identifying device 35. The identifying device 35 performs a hard decision on data for each user sent from the multiplying section 34, enabling to obtain demodulated data. As mentioned above, according to an interference signal removing apparatus 30 that performs JD processing, demodulated data from which interference is removed can be obtained without executing despreading and RAKE combining.

Here, when the matrix computation apparatus according to the present invention is applied to the JD section 33, the matrix computation shown in equation (7) is executed at high speed, thereby making it possible to obtain the matrix B. Particularly, in mobile communications, since time variations in interference components are large, the high speed computation effect of the matrix computation apparatus according to the present invention is brought to the fore. Moreover, since the matrix computation apparatus of the present invention can be implemented with a simple structure, much smaller-sized portable receiving apparatus can be implemented.

Furthermore, since the interference removing apparatus 30 illustrated in FIG. 9 includes matched filters 32a to 32n, if the structures of the matched filters 32a to 32n are shared with the matrix computation apparatus of the present invention, the configuration can be more simplified. A more specific explanation will be explained. The matrix computation apparatus of the present invention is configured to include a shift register, a plurality of multipliers, and an adder. While, the matched filter is generally configured to include a shift register, a plurality of multipliers, and an adder. Accordingly, for example, the computation of the channel estimation value due to each of the matched filters 32a to 32n and the matrix computation due to the JD section 33 are performed in a time division manner, thereby enabling to make effective use of the matched filters 32a to 32n in the matrix computation processing. As a result, the configuration of the JD section 33 can be simplified.

The above explained the case in which the matched filters for the channel estimation of the received signal and the joint detection section were combined. However, since the matched filters are widely used to take data correlation, combination with matched filters that are used in, for example, automatic frequency control and synchronous processing may be possible without limiting to the combination with the matched filters for the channel estimation.

(Another embodiment)

Additionally, in the aforementioned embodiment, the matrix computation apparatus of the present invention was configured as illustrated in FIGS. 1 and 2. However, the present invention is not limited to this. To sum up, the diagonal elements of the triangular matrix are stored in the memories, a computation using the output from each shift stage of the shift register and the diagonal element output from the memory is performed, a computation result is input to the shift register, computation processing using a new register output from each shift stage of the shift register and the diagonal element output from the memory is cyclically repeated, and a simultaneous linear equation may be thereby solved.

According to this, since the diagonal elements of the matrix, which are necessary for the matrix computation, are stored in the memories, all elements can be used in computation processing in parallel, and cyclic computation processing is simply provided, thereby enabling to solve a solution of a large-scale simultaneous linear equation.

Moreover, the aforementioned embodiment explained the case in which the matrix computation apparatus according to the present invention was applied at the time of obtaining a solution of a simultaneous linear equation shown in equations (1) to (6). However, the present invention is not limited to this, and the present invention can be widely applied to a case in which a matrix computation is performed using Cholesky decomposition and approximate Cholesky decomposition to make it possible to obtain the same effect as that of the aforementioned embodiment.

The present invention is not limited to the aforementioned embodiment, and various modifications may be possible.

The matrix computation apparatus of the present invention is a matrix computation apparatus that solves a simultaneous linear equation using a triangular matrix, and adopts a configuration including a shift register, storage means for storing diagonal elements of the triangular matrix and computing means for performing a computation using a register output from each shift stage of the shift register and a diagonal element output from the storage means, wherein a computation result obtained by the computing means is input to the shift register, and computation processing using a new register output from each shift stage of the shift register and the diagonal element output from the memory is cyclically repeated, thereby solving a simultaneous linear equation.

According to this configuration, it is possible to calculate one element for one cycle at the time of obtaining a solution of a simultaneous linear equation using a triangular matrix subjected to triangular decomposition, and a computation result of a triangular matrix calculated for a previous cycle can be used as a computation element for a next computation, thereby eliminating data transmission and reception between processors to enable to efficiently obtain a solution of a large-scale simultaneous linear equation with a small circuit scale.

Furthermore, the matrix computation apparatus of the present invention adopts a configuration wherein when the triangular matrix is a triangular matrix having a matrix of N rows x N columns, a shift register includes shift stages (N-1), storage means includes a first memory that stores diagonal elements of the triangular matrix to output a plurality of different diagonal elements every computation cycle, a second memory that stores elements of a known matrix of N rows x 1 column to output one matrix element every computation cycle, and a third memory that stores diagonal elements of a triangular matrix to output one diagonal element every computation cycle, computing means includes a plurality of multipliers that multiply a plurality of register outputs and a plurality of diagonal element outputs from the first memory, an adder that adds multiplication results due to these multipliers, a subtractor that subtracts the matrix element output sent from the second memory by an additional result due to the adder, a divider that divides a subtraction result due to the subtractor by the diagonal element output from the third memory, and a division result sequentially output from the divider is input to the shift register and the division result sequentially output from the divider is used as a solution of a simultaneous linear equation.

According to this configuration, it is possible to efficiently obtain a solution of a simultaneous linear equation by a small number of memories and a small number of computation elements.

The matrix computation apparatus of the present invention adopts a configuration wherein when the calculation of a forward substitution and that of a backward substitution are executed sequentially to obtain a solution of a simultaneous linear equation, a solution obtained by the forward substitution is stored as a matrix element of the second memory, and the matrix elements stored in the first, second and third memories for each computation cycle are read in reverse to the case of the forward substitution.

According to this configuration, when the calculation of the forward substitution and that of the backward substitution are executed sequentially to obtain each solution of the simultaneous linear equation, the backward substitution can be performed using the memory employed in the forward substitution efficiently, thereby making it possible to obtain a solution of a simultaneous linear equation by the forward substitution and the backward substitution without increasing the number of memories.

The interference removing apparatus of the mobile communication system of the present invention adopts a configuration having the aforementioned matrix computation apparatus.

According to this configuration, since matrix computation is performed at high speed with a simple configuration to enable to remove an interference component from the received signal, for example, application to an interference removing apparatus of a cellular phone enables to implement a small-size cellar phone that can satisfactorily remove an interference component, which varies according to movement, by high speed operation to allow acquisition of demodulated data with high quality. The same goes for application to a radio base station.

The interference removing apparatus of the mobile communication system of the present invention adopts a configuration in which a shift register, a plurality of multipliers, and an adder that constitute matched filters provided to take data correlation are shared as the shift register, the plurality of multipliers and the adder of the matrix computation apparatus.

According to this configuration, effective use of parts constituting matched filters is made to enable to execute a matrix computation, thereby making it possible to implement an interference removing apparatus with a much smaller circuit scale.

As explained above, according to the present invention, diagonal elements of the triangular matrix are stored in the memories, computation using an output from each shift stage of a shift register and a diagonal element output from the memory is performed, a computation result is input to the shift register, and computation processing using a new register output from each shift register of the shift register and a diagonal element from the memory is cyclically repeated to thereby solve a simultaneous linear equation, enabling to implement a matrix computation apparatus that eliminates data transmission and reception between processors to make it possible to perform computation efficiently with a small circuit scale.

This application is based on the Japanese Patent Application No.2002-41259 filed on February 19, 2002, entire content of which is expressly incorporated by reference herein.

Industrial Applicability

The present invention can be applied to, for example, structural analysis and mobile communications.

**Claims**

1. A matrix computation apparatus that solves a simultaneous linear equation using a triangular matrix, said apparatus comprising:

   a shift register;
   storage means for storing diagonal elements of the triangular matrix; and
   computing means for performing a computation using a register output from each shift stage of said shift register and a diagonal element output from said storage means,

   wherein a computation result obtained by said computing means is input to said shift register, and computation processing using a new register output from each shift stage of said shift register and the diagonal element output from the memory is cyclically repeated, thereby solving a simultaneous linear equation.

2. The matrix computation apparatus according to claim 1, wherein when the triangular matrix is a triangular matrix having a matrix of N rows x N columns, said shift register includes shift stages (N-1), said storage means includes a first memory that stores diagonal elements of the triangular matrix to output a plurality of different diagonal elements every computation cycle, a second memory that stores elements of a known matrix of N rows x 1 column to output one matrix element every computation cycle, and a third memory that stores diagonal elements of a triangular matrix to output one diagonal element every computation cycle, said computing means includes a plurality of multipliers that multiply a plurality of register outputs and a plurality of diagonal element outputs from the first memory, an adder that adds multiplication results due to these multipliers, a subtractor that subtracts the matrix element output sent from the second memory by an additional result due to the adder, and a divider that divides a subtraction result due to the subtractor by the diagonal element output from the third memory wherein a division result sequentially output from the divider is input to the shift register and the division result sequentially output from the divider is used as a solution of a simultaneous linear equation.

3. The matrix computation apparatus according to claim 2, wherein when the calculation of a forward substitution and that of a backward substitution are executed sequentially to obtain a solution of a simultaneous linear equation, a solution obtained by the forward substitution is stored as a matrix element of the second memory, and the matrix elements stored in the first, second and third memories for each computation cycle are read in reverse to the case of the forward substitution.

4. An interference removing apparatus of a mobile communication system having the matrix computation apparatus according to claim 1.

5. The interference removing apparatus of the mobile communication system according to claim 4, wherein a shift register, a plurality of multipliers and an adder that constitute matched filters provided to take data correlation are shared as the shift register, the plurality of multipliers and the adder of said matrix computation apparatus.

10 MATRIX COMPUTATION APPARATUS

FIG.1

FIG.2

EP 1 411 441 A1

FIG.3

EP 1 411 441 A1

**(INITIAL STATE)**

| | FIRST CYCLE | SECOND CYCLE | THIRD CYCLE |
|---|---|---|---|

SHIFT REGISTER

| 0 | 0 | 0 | 0 |

| z1 | 0 | 0 | 0 |  ADDRESS INCREMENT START

| z2 | z1 | 0 | 0 |

→ a2

FIRST MEMORY 1

| a54 | a43 | a32 | a21 | → a2

| a54 | a43 | a32 | a21 | → a2

| a54 | a43 | a32 | a21 | → a2    ADDRESS INCREMENT START

FIRST MEMORY 2

| a53 | a42 | a31 | → a3

| a53 | a42 | a31 | → a3

| a53 | a42 | a31 | → a3

FIRST MEMORY 3

| a52 | a41 | → a4

| a52 | a41 | → a4

| a52 | a41 | → a4

FIRST MEMORY 4

| a51 | → a5

| a51 | → a5

| a51 | → a5

SECOND MEMORY

| y5 | y4 | y3 | y2 | y1 | → y

| y5 | y4 | y3 | y2 | y1 | → y

| y5 | y4 | y3 | y2 | y1 | → y

THIRD MEMORY

| a55 | a44 | a33 | a22 | a11 | → a1

| a55 | a44 | a33 | a22 | a11 | → a1

| a55 | a44 | a33 | a22 | a11 | → a1

FOURTH MEMORY

| | | | | |

| | | | | z1 |

| | | | z2 | z1 |

FIG.4

EP 1 411 441 A1

FOURTH CYCLE

FIFTH CYCLE

COMPUTATION
ENDING TIME

SHIFT
REGISTER

| $z3$ | $z2$ | $z1$ | 0 |

| $z4$ | $z3$ | $z2$ | $z1$ |

| $z5$ | $z4$ | $z3$ | $z2$ |

FIRST
MEMORY 1

| a54 | a43 | a32 | a21 | → $a2$

| a54 | a43 | a32 | a21 | → $a2$

| a54 | a43 | a32 | a21 | → $a1$

FIRST
MEMORY 2

| a53 | a42 | a31 | → $a3$

| a53 | a42 | a31 | → $a3$

| a53 | a42 | a31 | → $a2$

ADDRESS
INCREMENT
START

FIRST
MEMORY 3

| a52 | a41 | → $a4$

| a52 | a41 | → $a4$

| a52 | a41 | → $a3$

FIRST
MEMORY 4

| a51 | → $a5$

| a51 | → $a5$

| a51 | → $a4$

SECOND
MEMORY

| y5 | y4 | y3 | y2 | y1 | → $y$

| y5 | y4 | y3 | y2 | y1 | → $y$

| y5 | y4 | y3 | y2 | y1 | → $y$

THIRD
MEMORY

| a55 | a44 | a33 | a22 | a11 | → $a1$

| a55 | a44 | a33 | a22 | a11 | → $a1$

| a55 | a44 | a33 | a22 | a11 | → $a1$

FOURTH
MEMORY

| | | z3 | z2 | z1 |

| | z4 | z3 | z2 | z1 |

| z5 | z4 | z3 | z2 | z1 |

ADDRESS STOP

ADDRESS INCREMENT

FIG.5

FIG.6

FIG.7

FIG.8

EP 1 411 441 A1

FIG.9

**EP 1 411 441 A1**

<table>
<tr><td colspan="2" align="center">INTERNATIONAL SEARCH REPORT</td><td>International application No.<br>PCT/JP03/01752</td></tr>
</table>

A. CLASSIFICATION OF SUBJECT MATTER
Int.Cl$^7$   G06F17/12, G06F17/16, G06F17/10, H04B7/26, H04B7/005, H04B1/707

According to International Patent Classification (IPC) or to both national classification and IPC

B. FIELDS SEARCHED

Minimum documentation searched (classification system followed by classification symbols)
Int.Cl$^7$   G06F17/10-17/18, H01Q3/00-3/46, H04B1/00-7/26, H01Q21/00-25/04, H04Q7/00-7/38, H04L1/02-1/06

Documentation searched other than minimum documentation to the extent that such documents are included in the fields searched
Jitsuyo Shinan Koho            1922-1996    Toroku Jitsuyo Shinan Koho     1994-2003
Kokai Jitsuyo Shinan Koho      1971-2003    Jitsuyo Shinan Toroku Koho     1996-2003

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| E,X | JP 2003-122736 A   (Matsushita Electric Industrial Co., Ltd.),<br>25 April, 2003 (25.04.03),<br>(Family: none) | 1-4 |
| A | US 5436929 A   (France Telecom),<br>25 July, 1995 (25.07.95),<br>& EP 0576359 B1         & FR 2693062 A1<br>& JP 6-284053 A | 1-5 |
| A | JP 54-132144 A   (Nippon Telegraph & Telephone Public Corp.),<br>13 October, 1979 (13.10.79),<br>(Family: none) | 1-5 |

☐ Further documents are listed in the continuation of Box C.          ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 10 June, 2003 (10.06.03) | 24 June, 2003 (24.06.03) |

| Name and mailing address of the ISA/<br>   Japanese Patent Office | Authorized officer |
|---|---|
| Facsimile No. | Telephone No. |

Form PCT/ISA/210 (second sheet) (July 1998)

21

| INTERNATIONAL SEARCH REPORT | International application No. |
|---|---|
| | PCT/JP03/01752 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 8-30583 A (Fujitsu Ltd.), 02 February, 1996 (02.02.96), (Family: none) | 1-5 |
| A | JP 61-241879 A (Fanuc Ltd.), 28 October, 1986 (28.10.86), (Family: none) | 1-5 |
| A | JP 9-212489 A (Fujitsu Ltd.), 15 August, 1997 (15.08.97), Par. No. [0169]; Fig. 15 (Family: none) | 1-5 |
| A | B.G. MERTZIOS, A.N. VENETSANOPOULOS, Minimum Cycle Fast Implementation of Two-Dimensional Digital Filters Based on the Lu Decomposition, Signal Processing, July 1989, Vol.17, No.3, pages 227 to 239 | 1-5 |

Form PCT/ISA/210 (continuation of second sheet) (July 1998)